# FASCICULE DE BREVET EUROPEEN

(11) **EP 4 359 986 B1**
(45) Date de publication et mention de la délivrance du brevet: **22.04.2026**
(21) Numéro de dépôt: 22741350.7
(22) Date de dépôt: 20.06.2022
(51) Int. Cl.: G06F 21/64, G06Q 30/06

(54) **PROCÉDÉ ET DISPOSITIF DE PAIEMENT PAR CHAÎNES DE BLOCS**
BLOCKCHAIN-ZAHLUNGSVERFAHREN UND -VORRICHTUNG
BLOCKCHAIN PAYMENT METHOD AND DEVICE

(30) Priorité: 22.06.2021 FR 2106623
(43) Date de publication de la demande: 01.05.2024
(73) Titulaire: Orange, 92130 Issy-les-Moulineaux (FR)
(72) Inventeur: BERTIN, Emmanuel, 92326 CHÂTILLON CEDEX (FR); HATIN, Julien, 92326 CHÂTILLON CEDEX (FR)
(86) Numéro de dépôt international: PCT/FR2022/051189
(87) Numéro de publication internationale: WO 2022/269179

(56) Documents cités:
- WO-A1-2017/145018
- FELIX ENGELMANN ET AL: "SwapCT: Swap Confidential Transactions for Privacy-Preserving Multi-Token Exchanges", vol. 20210517:063328, 13 May 2021 (2021-05-13), pages 1 - 21, XP061059245, Retrieved from the Internet <URL:https://eprint.iacr.org/2021/631.pdf> [retrieved on 20210513]
- ELLI ANDROULAKI ET AL: "Privacy-preserving auditable token payments in a permissioned blockchain system", vol. 20190918:145636, 18 September 2019 (2019-09-18), pages 1 - 35, XP061033384, Retrieved from the Internet <URL:http://eprint.iacr.org/2019/1058.pdf> [retrieved on 20190918]

## Description

### 1. Domaine de l'invention

L'invention se rapporte au domaine général des réseaux de télécommunications et plus particulièrement à la technologie des chaînes de blocs (« blockchain » en anglais).

### 2. Art Antérieur

Comme indiqué dans le document (https://fr.wikipedia.org/wiki/Blockchain), la technologie des chaînes de blocs est une technologie de stockage et de transmission d'informations sans organe de contrôle. Techniquement, il s'agit d'une base de données distribuée dont les informations envoyées par les utilisateurs et les liens internes à la base sont vérifiés et groupés à intervalles de temps réguliers en blocs, l'ensemble étant sécurisé par cryptographie, et formant ainsi une chaîne. Par extension, une chaîne de blocs est une base de données distribuée qui gère une liste d'enregistrements protégés contre la falsification ou la modification par les nœuds de stockage ; c'est donc un registre distribué et sécurisé de toutes les transactions effectuées depuis le démarrage du système. Les chaînes de blocs sont notamment caractérisées en ce que leurs contenus ne peuvent pas être modifiés ou supprimés: une information publiée (c'est-à-dire enregistrée ou sauvegardée) dans une chaîne de blocs le reste pour toujours. Ainsi, une chaîne de blocs est réputée inaltérable et permet la gestion de données sensibles telles que des crypto-monnaies (monnaie émise de pair à pair sans intervention d'une banque centrale). On peut citer par exemple la monnaie électronique décentralisée Bitcoin créée en 2009.

WO 2017/145018 A1 décrit un procédé et un système mis en œuvre par ordinateur pour le transfert sécurisé d'entités sur une blockchain. Le procédé implique la génération d'un script avec des métadonnées sur l'entité et une condition de localisation, le hachage du script et sa publication sur une table de hachage distribuée (DHT). Il inclut également la mise en correspondance des invitations, la vérification des conditions et l'exécution de transactions sur un grand livre distribué pair-à-pair comme la blockchain Bitcoin.

FELIX ENGELMANN ET AL dans "SwapCT: Swap Confidential Transactions for Privacy-Preserving Multi-Token Exchanges" décrit le système SwapCT comme alternative pour résoudre le problème associé aux échanges de jetons décentralisés qui privilégient la sécurité mais compromettent souvent la confidentialité des transactions. SwapCT permet des échanges sécurisés, privés et non interactifs entre plusieurs types de jetons.

ELLI ANDROULAKI ET AL dans "Privacy-preserving auditable token payments in a permissioned blockchain system" présente un système de paiement par jetons auditable et préservant la vie privée, conçu pour les systèmes de blockchain autorisés. Le système vise à fournir confidentialité, autorisation et auditabilitéen utilisant des techniques cryptographiques avancées.

De façon connue, la sécurité d'une chaîne de blocs réside également dans le fait que les transactions réalisées au niveau de la chaîne de blocs sont visibles par tous ceux qui ont accès à cette chaîne de blocs. Cette transparence est une propriété fondamentale de la chaîne de blocs.

Pourtant, lorsque l'on souhaite utiliser une chaîne de blocs pour réaliser des transactions financières, cette transparence peut devenir un handicap, notamment lorsque l'une des parties ne souhaite pas révéler le montant de la transaction. Ceci est notamment le cas lorsqu'une entreprise utilise une chaîne de blocs pour gérer, par exemple via des contrats intelligents (« smart-contracts » en anglais), la commande de biens ou de services. En effet, la confidentialité du prix payé est un élément important de la relation commerciale. Cette confidentialité permet la construction de la politique tarifaire du fournisseur de façon optimale, en fonction des marges de négociation.

Un contrat intelligent est un petit programme informatique qui permet de réaliser des transactions de jetons (« tokens » en anglais) sous certaines conditions. L'objectif de ces contrats intelligents est de remplacer les contrats papiers par un code informatique afin de digitaliser les processus.

### 3. Exposé de l'invention

L'invention vient améliorer l'état de la technique et propose à cet effet un procédé de paiement mis en œuvre par un dispositif de paiement et caractérisé en ce qu'il comprend :
- une étape de réception d'une première requête à destination d'un programme informatique, dit contrat intelligent, inscrit à une chaîne de blocs, ladite première requête comprenant au moins un jeton électronique associé à au moins un paramètre ;
- une première étape d'émission, en réponse à une deuxième requête en provenance d'une application de service, dudit au moins un paramètre ;
- une deuxième étape d'émission, en réponse à une troisième requête en provenance de ladite application de service, dudit au moins un jeton.

Avantageusement, ce mode de mise en œuvre de l'invention permet la fourniture, à une application de service, de paramètres d'utilisation de jetons contenus au sein d'un contrat intelligent afin que celle-ci puisse vérifier que les jetons sont bien valides et qu'ils permettent l'exécution du service. Une fois la vérification réalisée et les jetons validés, le procédé transmet, à la demande de l'application de service, les jetons d'application de service.

Par exemple, une entreprise souhaitant acheter une prestation négocie un prix avec un fournisseur du service. Lorsque les parties concluent le marché, le prix négocié est traduit en un ou plusieurs jetons associés à un ou plusieurs paramètres d'utilisation tels que le type d'accès, les droits d'accès, la volumétrie, un quota d'exécution, des paramètres métier spécifiques à la prestation, un identifiant de service, etc. Les jetons sont ensuite provisionnés dans un contrat intelligent inscrit à une chaîne de blocs.

Lorsque l'entreprise demande la réalisation du contrat (c'est-à-dire l'exécution du service) elle donne au fournisseur du service (l'application de service) la référence du contrat intelligent contenant les jetons. Le fournisseur de service vérifie ensuite les paramètres des jetons puis, s'ils sont valides, demande le transfert des jetons avant ou après l'exécution du service. Ainsi, le prix négocié n'est pas visible des personnes qui ont accès à la chaîne de blocs et la confidentialité du prix payé nécessaire à l'exécution du service est respectée.

A noter que le contrat intelligent peut être créé de façon éphémère, c'est-à-dire pour une transaction unique ou bien rechargée à la demande en fonction des prestations négociées.

On entend par chaîne de blocs, des chaînes de blocs capables d'exécuter des dApps. Les DApps sont des applications décentralisées appelées (Decentralized Applications en anglais). Nous pouvons citer par exemple et de manière non exhaustive : EOS, Hyperledger Burrow, Hyperledger Fabric, Ethereum, Neo, Counterparty, Lisk, etc. Concrètement, chaque application décentralisée présente au sein de la chaîne de blocs est composée d'un code binaire et d'une interface exposant des méthodes pouvant être appelées, par exemple par un tiers ou par d'autres applications. Une DApps dispose également d'une zone de données privée qu'elle va pouvoir modifier en fonction des traitements effectués.

On entend par application de service, un logiciel informatique développé pour être exécuté sur un terminal tel qu'un téléphone, un ordinateur, un objet connecté, un véhicule connecté, une tablette, etc. et permettant l'exécution d'un service.

On entend par jeton électronique une suite de caractères et/ou de données binaires unique associée à une certaine valeur financière. Un jeton électronique est, par exemple, une unité de consommation ne contenant aucune référence à un prix. Il est par contre lié à des paramètres d'utilisation permettant d'en déterminer la valeur.

Selon un mode de réalisation particulier de l'invention, un procédé tel que décrit ci-dessus est caractérisé en ce que l'étape de réception est suivie d'une deuxième étape de réception, en provenance d'un utilisateur, d'une requête autorisant l'émission de données par ledit contrat intelligent.

Ce mode de réalisation permet une sécurité accrue. En effet, pour que les jetons soient transférés vers l'application de service, l'utilisateur doit au préalable autoriser la transaction. Cette autorisation peut par exemple se faire via des identifiants ou des clefs cryptographiques. Bien entendu, le procédé autorise l'émission de données uniquement si les identifiants et/ou les clefs cryptographiques sont valides.

Selon une variante de ce mode particulier de réalisation de l'invention, un procédé tel que décrit ci-dessus est caractérisé en ce que la requête autorisant l'émission de données comprend un identifiant de ladite application de service.

Ce mode de réalisation permet une sécurité supplémentaire. L'autorisation de l'émission de données étant uniquement valide pour l'application de service identifiée par l'identifiant d'application de service.

Selon un mode de réalisation particulier de l'invention, un procédé tel que décrit ci-dessus est caractérisé en ce que la deuxième étape d'émission est conditionnée par la réponse à une requête émise à destination dudit utilisateur.

Ce mode de réalisation permet de conditionner l'émission des jetons à un accord de l'utilisateur (client de la prestation de service). La validation de l'utilisateur peut ainsi se faire transaction par transaction. Cette autorisation peut par exemple se faire via des identifiants ou de clefs cryptographiques. Bien entendu, le procédé autorise l'émission de jetons uniquement si les identifiants et/ou les clefs cryptographiques sont valides.

Selon un mode de réalisation particulier de l'invention, un procédé tel que décrit ci-dessus est caractérisé en ce que la deuxième étape d'émission est suivie d'une troisième étape d'émission de données comprenant au moins un identifiant de ladite application de service et ledit au moins un jeton.

Ce mode de réalisation permet d'obtenir les informations de la transaction, c'est-à-dire les jetons utilisés pour une application de service donnée, par exemple pour l'établissement de factures ou de statistiques. Cela peut également permettre le suivi de la consommation / utilisation des jetons contenus dans le contrat intelligent.

On entend par identifiant d'application de service une suite de caractères et/ou de données binaires qui sert à identifier une application de service.

Selon un mode de réalisation particulier de l'invention, un procédé tel que décrit ci-dessus est caractérisé en ce que ledit au moins un paramètre correspond au moins à une durée ou à un horaire.

Ce mode de réalisation permet au fournisseur du service de vérifier que les conditions d'exécution du service sont bien conformes à ce qui a été négocié en termes de durée ou d'horaire pour l'exécution.

Selon un mode de réalisation particulier de l'invention, un procédé tel que décrit ci-dessus est caractérisé en ce que ledit au moins un paramètre correspond au moins à un quota d'exécution d'un service par ladite application de service.

Ce mode de réalisation permet au fournisseur du service de vérifier que les conditions d'exécution du service sont bien conformes à ce qui a été négocié en termes de quota d'exécution du service.

Selon un mode de réalisation particulier de l'invention, un procédé tel que décrit ci-dessus est caractérisé en ce que la quantité de jetons émis lors la deuxième étape d'émission correspond à un nombre de jetons compris dans la troisième requête.

Ce mode de réalisation permet au fournisseur de service de préciser le nombre de jetons à transférer pour l'exécution du service. Cela permet par exemple la prise en compte d'un changement de grille tarifaire de la part du fournisseur du service avec un ajustement de la consommation des jetons pour l'exécution du service.

Selon un mode de réalisation particulier de l'invention, un procédé tel que décrit ci-dessus est caractérisé en ce que ledit au moins un jeton obtenu lors de l'étape de réception est en outre associé à un identifiant de service et en ce que :
- ledit au moins un paramètre émis lors de la première étape d'émission est fonction d'un second identifiant obtenu depuis ladite deuxième requête ;
- ledit au moins un jeton émis lors de la deuxième étape d'émission est fonction d'un troisième identifiant obtenu depuis ladite troisième requête.

Ce mode de réalisation permet par exemple de gérer et distinguer au sein d'un même contrat intelligent les jetons de différents services, chaque jeton étant associé à un identifiant de service (c'est-à-dire à une application de service qui fournit le service en question). Pour ce faire, lorsque que l'application de service interroge le contrat intelligent, celle-ci fournit son identifiant. Le procédé peut alors trier les jetons contenus dans le contrat intelligent en fonction de l'identifiant reçu et ne renvoyer à l'application de service que les jetons ou les paramètres associés aux jetons provisionnés dans le contrat intelligent pour ce service.

On entend par identifiant de service une suite de caractères et/ou de données binaires qui sert à identifier un service.

L'invention concerne également un dispositif de paiement caractérisé en ce qu'il comprend :
- un module de réception d'une première requête à destination d'un programme informatique, dit contrat intelligent, inscrit à une chaîne de blocs, ladite première requête comprenant au moins un jeton électronique associé à au moins un paramètre ;
- un premier module d'émission, en réponse à une deuxième requête en provenance d'une application de service, dudit au moins un paramètre ;
- un deuxième module d'émission, en réponse à une troisième requête en provenance de ladite application de service, dudit au moins un jeton.

L'invention concerne en outre une chaîne de blocs caractérisée en ce qu'elle comporte un dispositif de paiement tel que décrit précédemment.

Le terme module peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions telles que décrites pour les modules concernés. De la même manière, un composant matériel correspond à tout élément d'un ensemble matériel (ou hardware) apte à mettre en œuvre une fonction ou un ensemble de fonctions pour le module concerné (circuit intégré, carte à puce, carte à mémoire, etc.).

L'invention concerne également un programme d'ordinateur comportant des instructions pour la mise en œuvre du procédé ci-dessus selon l'un quelconque des modes particuliers de réalisation décrits précédemment, lorsque ledit programme est exécuté par un processeur. Le procédé peut être mis en œuvre de diverses manières, notamment sous forme câblée ou sous forme logicielle. Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'enregistrement ou support d'informations lisible par un ordinateur, et comportant des instructions d'un programme d'ordinateur tel que mentionné ci-dessus. Les supports d'enregistrement mentionnés ci-avant peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur. D'autre part, les supports d'enregistrement peuvent correspondre à un support transmissible tel qu'un signal électrique ou optique, qui peut être acheminé via un câble électrique ou optique, par radio ou par d'autres moyens. Les programmes selon l'invention peuvent être en particulier téléchargés sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question.

Ce dispositif de paiement et ce programme d'ordinateur présentent des caractéristiques et avantages analogues à ceux décrits précédemment en relation avec le procédé de paiement.

### 4. Liste des figures

D'autres caractéristiques et avantages de l'invention apparaîtront plus clairement à la lecture de la description suivante de modes de réalisation particuliers, donnés à titre de simples exemples illustratifs et non limitatifs, et des dessins annexés, parmi lesquels :
[Fig 1] La figure 1 représente l'architecture matérielle d'un dispositif de paiement selon un mode particulier de réalisation ;
[Fig 2] La figure 2 représente sous forme d'organigramme les principales étapes d'un procédé de paiement conformes aux modes de réalisation de l'invention,

### 5. Description d'un mode de réalisation de l'invention

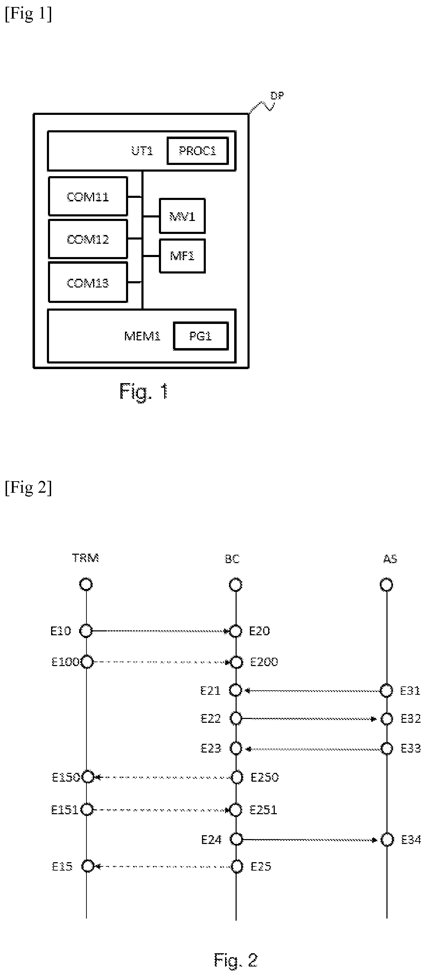

La figure 1 représente l'architecture matérielle d'un dispositif de paiement DP conforme à l'invention. Dans le mode de réalisation décrit ici, ce dispositif a l'architecture matérielle d'un ordinateur. Il comprend notamment un processeur PROC1, une mémoire vive MV1, une mémoire morte MEM1 et une mémoire flash non volatile MF1. De tels moyens sont connus en soi et ne sont pas décrits plus en détail ici. La mémoire morte constitue un support d'enregistrement conforme à l'invention, lisible par le processeur PROC1 et sur lequel est enregistré ici un programme d'ordinateur PG1 conforme à l'invention, ce programme comportant des instructions pour mettre en œuvre les étapes du procédé de paiement tel que décrit précédemment, lorsque le programme est exécuté par le processeur PROC1.

A l'initialisation, les instructions de code du programme d'ordinateur PG1 sont par exemple chargées dans une mémoire avant d'être exécutées par le processeur PROC1. Le processeur PROC1 de l'unité de traitement UT1 met notamment en œuvre les étapes du procédé de paiement selon l'un quelconque des modes particuliers de réalisation décrits en relation avec la figure 2, selon les instructions du programme d'ordinateur PG1.

Le dispositif DP comprend également des modules de communication COM11, COM12 et COM13 configurés pour établir des communications avec par exemple un réseau IP et/ou circuit. Le module de communication COM11 est utilisé pour recevoir des requêtes à destination d'un contrat intelligent inscrit à une chaîne de blocs, le module COM12 pour émettre en réponse à une requête en provenance d'une application de service des paramètres associés aux jetons contenus dans le contrat intelligent et le module COM13 pour émettre en réponse à une requête en provenance d'une application de service des jetons.

Selon un mode particulier de réalisation de l'invention, les modules COM11, COM12 et COM13 peuvent être un seul et même module (COM1) de communication.

Selon un mode particulier de réalisation de l'invention, le module COM1 peut aussi être utilisé pour émettre des données comprenant au moins un identifiant de ladite application de service et des jetons à destination d'un utilisateur d'un terminal.

Selon un mode particulier de réalisation de l'invention, le module COM1 peut en outre recevoir des requêtes d'autorisation et émettre des demandes d'autorisation concernant l'émission de données.

En référence à la figure 2, nous allons maintenant décrire les principales étapes d'un procédé de paiement selon un mode particulier de réalisation de l'invention.

La figure 2 est constituée d'un terminal TRM comme par exemple un terminal mobile ou un ordinateur apte à émettre et/ou recevoir des requêtes vers et depuis une chaîne de blocs. La figure 2 est également constituée d'une chaîne de blocs BC apte à exécuter des fonctions décentralisées ou DApps au sens de la technologie des chaînes de blocs. Dans le cas décrit à l'appui de la figure 2 la chaîne de blocs BC est apte à exécuter un contrat intelligent, c'est-à-dire une DApps, et le procédé de paiement selon l'invention. Le procédé de paiement est par exemple exécuté par une DApps dédiée.

Selon un mode particulier de réalisation de l'invention, le procédé de paiement est exécuté en dehors de la chaîne de blocs par exemple via un terminal (ordinateur, mobile, etc.) connecté et authentifié auprès de la chaîne de blocs BC.

La figure 2 comprend en outre une application de service AS apte à exécuter un service particulier. L'application de service est par exemple exécutée par un serveur, un terminal mobile, une passerelle domestique, un objet connecté ou plus généralement un terminal disposant de l'architecture matérielle d'un ordinateur.

Le terminal TRM, la chaîne de blocs et l'application de service communiquent entre eux via par exemple un réseau IP et/ou circuit public (par exemple le réseau Internet) ou privé.

Au cours d'une première étape E10, le terminal TRM envoie une requête d'exécution au contrat intelligent inscrit à la chaîne de blocs. La requête comprend un ou plusieurs jetons et un ou plusieurs paramètres associés aux jetons.

Selon un mode particulier de réalisation de l'invention, la requête peut également comprendre un identifiant du terminal TRM et/ou un identifiant d'utilisateur et/ou des clés cryptographiques permettant par exemple à la chaîne de blocs d'authentifier le terminal TRM ou l'utilisateur du terminal TRM. Bien évidement il est supposé que le terminal TRM et son utilisateur sont déjà connus et enregistrés au sein de la chaîne de blocs. Alternativement ou cumulativement, la requête peut en outre comprendre un identifiant de service et/ou d'application de service associé aux jetons.

Lors de l'étape E20 la requête est reçue par la chaîne de blocs BC. Les jetons associés à leurs paramètres et optionnellement à un identifiant de service sont ajoutés dans le contrat intelligent inscrit à la chaîne de blocs BC.

Lors de l'étape E21 le procédé de paiement reçoit une requête de paramètres émise (E31) par l'application de service AS. En réponse à cette requête, le procédé de paiement émet (E22) les paramètres associés aux jetons contenus au sein du contrat intelligent.

Selon un mode particulier de réalisation de l'invention, La requête reçue par le procédé peut comprendre en outre un identifiant de service et/ou d'application de service. Le procédé obtient ensuite, depuis le contrat intelligent, les jetons associés à cet identifiant de service et/ou d'application de service puis émet lors de l'étape E22 les paramètres associés aux jetons obtenus à destination de l'application de service AS. Ce mode de réalisation permet d'avoir au sein du contrat intelligent des jetons destinés à différentes applications de service AS ou à différents services gérés par la même application de services.

Lors de l'étape E32, l'application de service AS vérifie que les paramètres reçus correspondent bien à ce qu'il a été négocié avec le client, c'est-à-dire l'utilisateur du terminal TRM, pour l'exécution du service. Concrètement, que la durée et/ou le nombre d'exécution et/ou les horaires d'exécution sont bien conformes au contrat. L'application de service AS peut également vérifier que le nombre de jetons contenus dans le contrat intelligent est suffisant pour l'exécution du service.

Selon un mode particulier de réalisation de l'invention, l'application de service AS peut exécuter le service si les paramètres reçus sont valides.

Selon un mode particulier de réalisation de l'invention, l'application de service AS peut, en fonction des paramètres reçus, calculer un nombre de jetons nécessaires à l'exécution du service.

Lors de l'étape E33, l'application de service AS émet à destination du procédé une demande d'émission de jetons. Le procédé reçoit la demande (E23) puis envoie en retour les jetons à l'application de service. A noter que dans le cas d'un modèle de prépaiement, la réception des jetons par l'application de service (E34) peut être un prérequis à l'exécution du service. Dans le cas inverse l'application de service peut exécuter le service lors de l'étape E33, c'est-à-dire avant que les jetons ne soient transférés.

Selon un mode particulier de réalisation de l'invention, la demande de jetons peut comprendre un identifiant du service ou de l'application de service. Ce mode de réalisation permet au procédé d'obtenir et d'envoyer à l'application de service uniquement les jetons qui lui sont destinés.

Selon un mode particulier de réalisation de l'invention, le procédé peut à l'issu de l'étape E20, recevoir lors de l'étape E200 une requête d'autorisation émise par le terminal TRM (E100). Cette requête permet à l'utilisateur d'autoriser le procédé à émettre des données telles que les jetons et/ou leurs paramètres associés. Concrètement, le terminal TRM envoie au procédé, avec la demande d'autorisation, des données d'authentification telles que des identifiants et/ou des clefs cryptographiques (privés et / ou publics) permettant au procédé d'identifier l'utilisateur et/ou le terminal. Lorsque l'utilisateur et/ou le terminal TRM est identifié / authentifié par le procédé, le procédé permet l'envoi de données par le contrat intelligent. Ce mode de réalisation permet l'activation du contrat intelligent. La sécurité s'en trouve renforcée car aucune transaction ne peut être réalisée par le contrat intelligent sans cette activation préalable.

Selon un mode particulier de réalisation de l'invention, les étapes E10 à E34 sont réalisées une pluralité de fois. Il est ainsi possible d'utiliser le contrat intelligent plusieurs fois afin d'exécuter une pluralité de fois un ou plusieurs services.

Selon une variante de ce mode de réalisation, la requête d'autorisation comprend en outre un identifiant de service et/ou d'application de service. Ainsi, grâce à ce mode de réalisation, il est possible d'autoriser ou non l'émission de données par le contrat intelligent, service par service ou application de service par application de service.

Selon un mode particulier de réalisation de l'invention, le procédé peut, à l'issu de l'étape E23 émettre à destination du terminal TRM une demande d'autorisation (E250). Cette demande est ensuite reçue par le terminal TRM lors de l'étape E150. Le terminal TRM émet en retour (E151) une réponse qui est reçue par le procédé lors de l'étape E251. Concrètement, le terminal TRM peut envoyer au procédé, en réponse à la demande d'autorisation, un paramètre validant la demande d'autorisation ainsi que des données d'authentification telles que des identifiants et/ou des clefs cryptographiques (privés et / ou publics) permettant au procédé d'identifier l'utilisateur et/ou le terminal TRM. Lorsque l'utilisateur et/ou le terminal TRM est identifié / authentifié par le procédé, le procédé permet l'envoi de données par le contrat intelligent. Ce mode de réalisation permet à l'utilisateur de valider chaque transaction et ainsi contrôler l'émission des jetons (E24) par le contrat intelligent.

Selon un mode particulier de réalisation de l'invention, l'étape E24 est suivie d'une étape d'émission E25 à destination du terminal TRM de données comprenant au moins les jetons émis lors de l'étape E24 à destination de l'application de service et un identifiant de l'application de service. Ainsi, il est possible à l'utilisateur du terminal TRM de suivre la consommation des jetons pour par exemple établir une facture ou automatiser les processus de comptabilité.

## Revendications

1. Procédé de paiement mis en œuvre par un dispositif de paiement et **caractérisé en ce qu'**il comprend :
- une étape de réception (E20) d'une première requête à destination d'un programme informatique, dit contrat intelligent, inscrit à une chaîne de blocs, ladite première requête comprenant au moins un jeton électronique et au moins un paramètre associé audit au moins un jeton, l'ensemble desdits au moins un jeton et desdits au moins un paramètre correspondant à un prix ;
- une première étape d'émission (E22) pour vérification, en réponse à une deuxième requête (E21) en provenance d'une application de service, dudit au moins un paramètre ;
- une deuxième étape d'émission pour paiement (E24), en réponse à une troisième requête (E23) en provenance de ladite application de service, dudit au moins un jeton.

2. Procédé de paiement selon la revendication 1, dans lequel l'étape de réception est suivie d'une deuxième étape de réception (E200), en provenance d'un utilisateur, d'une requête (E100) autorisant l'émission de données par ledit contrat intelligent.

3. Procédé de paiement selon la revendication 2, dans lequel la requête autorisant l'émission de données comprend un identifiant de ladite application de service.

4. Procédé de paiement selon la revendication 1, dans lequel la deuxième étape d'émission est conditionnée par la réponse (E251) à une requête (E250) émise à destination dudit utilisateur.

5. Procédé de paiement selon la revendication 1, dans lequel la deuxième étape d'émission est suivie d'une troisième étape d'émission (E25) de données comprenant au moins un identifiant de ladite application de service et ledit au moins un jeton.

6. Procédé de paiement selon la revendication 1, dans lequel ledit au moins un paramètre correspond au moins à une durée ou à un horaire.

7. Procédé de paiement selon la revendication 1, dans lequel ledit au moins un paramètre correspond au moins à un quota d'exécution d'un service par ladite application de service.

8. Procédé de paiement selon la revendication 1, dans lequel la quantité de jetons émis lors la deuxième étape d'émission (E24) correspond à un nombre de jetons compris dans la troisième requête (E23).

9. Procédé de paiement selon la revendication 1, dans lequel ledit au moins un jeton obtenu lors de l'étape de réception (E20) est en outre associé à un identifiant de service et en ce que :
- ledit au moins un paramètre émis lors de la première étape d'émission (E22) est fonction d'un second identifiant obtenu depuis ladite deuxième requête ;
- ledit au moins un jeton émis lors de la deuxième étape d'émission (E24) est fonction d'un troisième identifiant obtenu depuis ladite troisième requête (E23).

10. Dispositif de paiement **caractérisé en ce qu'**il comprend :
- un module de réception (COM11) d'une première requête à destination d'un programme informatique, dit contrat intelligent, inscrit à une chaîne de blocs, ladite première requête comprenant au moins un jeton électronique et au moins un paramètre associé audit au moins un jeton, l'ensemble desdits au moins un jeton et desdits au moins un paramètre correspondant à un prix ;
- un premier module d'émission pour vérification (COM12), en réponse à une deuxième requête en provenance d'une application de service, dudit au moins un paramètre ;
- un deuxième module d'émission pour paiement (COM13), en réponse à une troisième requête en provenance de ladite application de service, dudit au moins un jeton.

11. Programme d'ordinateur comportant des instructions pour la mise en œuvre du procédé selon l'une quelconque des revendications 1 à 9, lorsque le programme est exécuté par un processeur.

## Patentansprüche

1. Zahlungsverfahren, das von einer Zahlungsvorrichtung durchgeführt wird und **dadurch gekennzeichnet ist, dass** es umfasst:
- einen Schritt des Empfangens (E20) einer ersten Anforderung an ein Computerprogramm, intelligenter Vertrag genannt, das in eine Blockchain eingetragen ist, wobei die erste Anforderung mindestens ein elektronisches Token und mindestens einen dem mindestens einen Token zugeordneten Parameter umfasst, wobei die Einheit aus dem mindestens einen Token und dem mindestens einen Parameter einem Preis entspricht;
- einen ersten Schritt des Sendens (E22) des mindestens einen Parameters zur Verifizierung als Antwort auf eine zweite Anforderung (E21) von einer Dienstanwendung;
- einen zweiten Schritt des Sendens des mindestens einen Tokens zur Zahlung (E24) als Antwort auf eine dritte Anforderung (E23) von der Dienstanwendung.

2. Zahlungsverfahren nach Anspruch 1, wobei auf den Schritt des Empfangens ein zweiter Schritt des Empfangens (E200) einer Anforderung (E100) von einem Nutzer folgt, die das Senden von Daten durch den intelligenten Vertrag autorisiert.

3. Zahlungsverfahren nach Anspruch 2, wobei die Anforderung, die das Senden von Daten autorisiert, eine Kennung der Dienstanwendung umfasst.

4. Zahlungsverfahren nach Anspruch 1, wobei der zweite Schritt des Sendens durch die Antwort (E251) auf eine an den Nutzer gesendete Anforderung (E250) bedingt ist.

5. Zahlungsverfahren nach Anspruch 1, wobei auf den zweiten Schritt des Sendens ein dritter Schritt des Sendens (E25) von Daten folgt, die mindestens eine Kennung der Dienstanwendung und das mindestens eine Token umfassen.

6. Zahlungsverfahren nach Anspruch 1, wobei der mindestens eine Parameter mindestens einer Dauer oder einer Zeitangabe entspricht.

7. Zahlungsverfahren nach Anspruch 1, wobei der mindestens eine Parameter mindestens einer Ausführungsquote eines Dienstes durch die Dienstanwendung entspricht.

8. Zahlungsverfahren nach Anspruch 1, wobei die Menge von Tokens, die bei dem zweiten Schritt des Sendens (E24) gesendet werden, einer Anzahl von Tokens entspricht, die in der dritten Anforderung (E23) enthalten sind.

9. Zahlungsverfahren nach Anspruch 1, wobei das mindestens eine Token, das bei dem Schritt des Empfangens (E20) erhalten wird, ferner einer Dienstkennung zugeordnet ist, und dadurch, dass:
- der mindestens eine Parameter, der bei dem ersten Schritt des Sendens (E22) gesendet wird, von einer zweiten Kennung abhängig ist, die aus der zweiten Anforderung erhalten wird;
- das mindestens eine Token, das bei dem zweiten Schritt des Sendens (E24) gesendet wird, von einer dritten Kennung abhängig ist, die aus der dritten Anforderung (E23) erhalten wird.

10. Zahlungsvorrichtung, **dadurch gekennzeichnet, dass** sie umfasst:
- ein Modul (COM11) zum Empfangen einer ersten Anforderung an ein Computerprogramm, intelligenter Vertrag genannt, das in eine Blockchain eingetragen ist, wobei die erste Anforderung mindestens ein elektronisches Token und mindestens einen dem mindestens einen Token zugeordneten Parameter umfasst, wobei die Einheit aus dem mindestens einen Token und dem mindestens einen Parameter einem Preis entspricht;
- ein erstes Modul (COM12) zum Senden des mindestens einen Parameters zur Verifizierung als Antwort auf eine zweite Anforderung von einer Dienstanwendung;
- ein zweites Modul (COM13) zum Senden des mindestens einen Tokens zur Zahlung als Antwort auf eine dritte Anforderung von der Dienstanwendung.

11. Computerprogramm, das Anweisungen umfasst, die bei der Ausführung des Programms durch einen Prozessor das Verfahren nach einem der Ansprüche 1 bis 9 durchführen.

## Claims

1. Payment method implemented by a payment device and **characterized in that** it comprises:
- a step of reception (E20) of a first request intended for a computer program, called smart contract, included in a blockchain, said first request comprising at least one electronic token and at least one parameter associated with said at least one token, said at least one token and said at least one parameter together corresponding to a price;
- a first step of transmission (E22) with a view to checking, in response to a second request (E21) originating from a service application, of said at least one parameter;
- a second step of transmission with a view to payment (E24), in response to a third request (E23) originating from said service application, of said at least one token.

2. Payment method according to Claim 1, wherein the reception step is followed by a second step of reception (E200), from a user, of a request (E100) authorizing the transmission of data by said smart contract.

3. Payment method according to Claim 2, wherein the request authorizing the transmission of data comprises an identifier of said service application.

4. Payment method according to Claim 1, wherein the second transmission step is conditioned by the response (E251) to a request (E250) transmitted to said user.

5. Payment method according to Claim 1, wherein the second transmission step is followed by a third step of transmission (E25) of data comprising at least one identifier of said service application and said at least one token.

6. Payment method according to Claim 1, wherein said at least one parameter corresponds at least to a duration or to a schedule.

7. Payment method according to Claim 1, wherein said at least one parameter corresponds at least to a quota of execution of a service by said service application.

8. Payment method according to Claim 1, wherein the quantity of tokens transmitted in the second transmission step (E24) corresponds to a number of tokens included in the third request (E23).

9. Payment method according to Claim 1, wherein said at least one token obtained in the reception step (E20) is further associated with a service identifier and wherein:
- said at least one parameter transmitted in the first transmission step (E22) is a function of a second identifier obtained from said second request;
- said at least one token transmitted in the second transmission step (E24) is a function of a third identifier obtained from said third request (E23).

10. Payment device, **characterized in that** it comprises:
- a module (COM11) for reception of a first request intended for a computer program, called smart contract, included in a blockchain, said first request comprising at least one electronic token and at least one parameter associated with said at least one token, said at least one token and said at least one parameter together corresponding to a price;
- a first module (COM12) for transmission with a view to checking, in response to a second request originating from a service application, of said at least one parameter;
- a second module (COM13) for transmission with a view to payment, in response to a third request originating from said service application, of said at least one token.

11. Computer program comprising instructions for the implementation of the method according to any one of Claims 1 to 9, when the program is run by a processor.
